# EUROPEAN PATENT APPLICATION

(11) **EP 1 498 031 A2**
(43) Date of publication of application: **19.01.2005**
(21) Application number: 04076926.7
(22) Date of filing: 02.07.2004
(51) Int. Cl.: A21B 3/07, A21B 1/48

(54) **Bake-off oven and method for baking off foods**

(30) Priority: 15.07.2003 NL 1023925
(71) Applicant: Henex Holding B.V., 7861 TG Oosterhesselen (NL)
(72) Inventor: Hendriks, Albert, 7861 TG Oosterhesselen (NL)
(74) Representative: Winckels, Johannes Hubertus F.

(57) **Abstract**

A bake-off oven (1) comprising a bake-off compartment (4) for baking off foods, and a heat source (5) for heating the bake-off compartment (4). Further, the bake-off oven (1) comprises an inlet and an outlet (17), while between the inlet and the outlet a continuously driveable conveyor belt (11) is provided which extends through the bake-off compartment (4) for transporting foods in a transport direction (T) from the inlet to the outlet. The inlet comprises a storage holder (6) whose bottom side is formed, at least partly, by an intermittently drivable shaker plate (8).

## Description

The invention relates to a bake-off oven, comprising a bake-off compartment for baking off foods, and a heat source for heating the bake-off compartment.

Such bake-off ovens are generally known, for instance for baking off pre-baked rolls in supermarkets or fast food chains. As the freshness of the rolls is determined for an important part by the time duration between the moment the baking process ends and the moment of consumption, baking off pre-baked rolls on the spot yields a product which clearly has an added value for the consumer. Baking off takes place by placing the rolls via an opened entrance of the baking oven into the bake-off compartment, whereupon the entrance is closed off again. After manually setting the bake-off time and, optionally, the baking temperature, the user activates the heat source so that the rolls finish baking. When the baking time is over, the bake-off oven generates a warning signal, typically an optical and/or acoustic signal, as a signal the rolls are ready for consumption and can be removed from the bake-off compartment.

As a rule, a user operates different bake-off ovens and/or other equipment for preparing food, which all require the specific attention of the user. The risk is very real that, for instance, when occupied with other equipment, the user cannot take the rolls out of the bake-off compartment immediately after the bake-off oven generates the warning signal. This, in turn, results in the rolls baking too long in the still hot oven, which is less appealing to the consumer of the rolls. Furthermore, baking off the rolls requires relatively many operations, such as opening and closing the bake-off compartment, for instance a door or a flap, placing rolls into and removing them from the bake-off compartment and setting the baking time.

The object of the invention is to provide a bake-off oven according to the opening paragraph, with which, while maintaining the advantages, the drawbacks mentioned are avoided. In particular, the object of the invention is to provide a bake-off oven designed for baking off foods on the spot, while the bake-off time is controlled better, also if a user cannot dedicate all his attention to the bake-off oven. To that end, the bake-off oven comprises an inlet and an outlet, while between the inlet and the outlet a continuously drivable conveyor belt is provided which extends through the bake-off compartment for transporting foods in a transport direction from the inlet to the outlet, the inlet comprising a storage holder whose bottom side is formed, at least partly, by an intermittently drivable shaker plate.

What is achieved by providing the bake-off oven with a continuously drivable conveyor belt which conveys the foods to be baked off from the inlet through the bake-off compartment to the outlet, is that the foods are present in the bake-off compartment for a predetermined bake-off time. The fact is that as the conveyor belt is continuously drivable, the time an object located on the conveyor belt spends in the bake-off compartment can be relatively accurately determined in advance. This results in an autonomous bake-off time which can be determined in advance. After baking-off, the foods are transported via the conveyor belt to the outlet. The user of the bake-off oven himself needs not carry out operations to the oven or the foods directly after the bake-off time has lapsed so that the bake-off time is not adversely influenced and the attention of the user can be divided over various apparatus.

What is achieved by further providing the inlet with a storage holder whose bottom side is at least partly provided with an intermittently drivable shaker plate is that the conveyor belt can be periodically replenished from the storage holder without time consuming additional operations by the user. During use of the bake-off oven, the user places a relatively large amount of pre-baked foods in the storage holder. By the intermittently driven shaker plate, periodically, relatively small amounts of foods are tossed from the storage holder onto the conveyor belt, so that a more or less continuous flow of foods is guided on the conveyor belt through the bake-off compartment. Once the conveyor belt has been filled with foods, the shaker plate is at rest for some time, until the conveyor belt has moved slightly and space has become available for new foods to be baked-off. Then, the shaker plate comes into action again. This repeats itself periodically. The user needs not carry out any operations. More in particular, the bake-off oven needs to be replenished with pre-baked foods less often than an existing bake-off oven. Furthermore, the time for filling the storage holder can be chosen fairly randomly.

By directing the shaker plate downwards at a slight inclination, during each period of mechanical activity of the shaker plate, a statistically considered well adjustable amount of foods is tossed onto the conveyor belt. This promotes a constant discharge of baked-off foods and increases the efficiency of the bake-off oven by optimal use of the heat source.

Preferably, the conveyor belt is positioned lower than the shaker plate so that the shaker plate is, substantially, located higher than the conveyor belt. As a result, gravity can be used when the foods are tossed from the shaker plate onto the conveyor belt. To that end, a lower edge provided on the shaker plate can be positioned, for instance, straight above a starting point of the conveyor belt, or the shaker plate can overlap the conveyor belt slightly. Also, the starting point of the conveyor belt can directly link up with the lower edge of the shaker plate, or even be positioned near a part of the shaker plate located above the conveyor belt. As a rule, when the shaker plate is at rest, the pre-baked foods are on the shaker plate, for instance due to gravity. Through the vibrations of the shaker plate, the foods are tossed up and down on the shaker plate, while the combination of gravity and the inclining orientation of the shaker plate result in a net displacement of the foods from the vibrating plate to the conveyor belt so that, periodically, a number of foods end up on the conveyor belt.

In a preferred embodiment, the shaker plate periodically generates a pulse of mechanical vibrations. Due to the vibrations, the foods are set in motion so that a net displacement in the direction of the conveyor belt is obtained.

By rendering the speed of the conveyor belt adjustable, the bake-off time can be varied too, as the speed of the conveyor belt determines the time an object present on the conveyor belt spends in the bake-off compartment. What is achieved by rendering the cycle time of the pulse substantially linearly dependent on the adjustable speed of the conveyor belt, is that, independently of the transport speed, the amount of foods per length of transport is approximately constant, in order to prevent situations in which foods lie too close together or too far apart.

Preferably, adjacent the outlet of the bake-off oven, an outlet bin is provided so that the baked-off foods can be collected in a suitable manner.

In a preferred embodiment, the outlet bin is provided with a detection circuit comprising a sensor for detecting a degree of filling of the outlet bin, so that the bake-off process can be automatically ended when the outlet bin is filled. What is achieved by generating a stop signal for switching off the shaker plate after detection of a predetermined degree of filling is, that the shaker plate no longer tosses foods on the conveyor belt, so that, in time, the conveyor belt too no longer places foods in the outlet bin. This avoids too great a degree of filling of the outlet bin in an elegant manner.

The invention also relates to a method for baking-off foods.

Preferably, prior to baking-off, the pre-baked foods exhibit a dark brown color on the outside so that they look more appealing to the consumer.

Further advantageous embodiments of the invention are represented in the subclaims.

The invention will be further elucidated with reference to exemplary embodiments represented in the drawing. In the drawing:
Fig. 1 shows a schematic side view of a bake-off oven according to the invention; and
Fig. 2 shows a representation of signals of pulses of a shaker plate from the bake-off oven of Fig. 1.

The Figures are only schematic representations of a preferred embodiment of the invention. In the Figures, identical or corresponding parts are indicated with the same reference numerals.

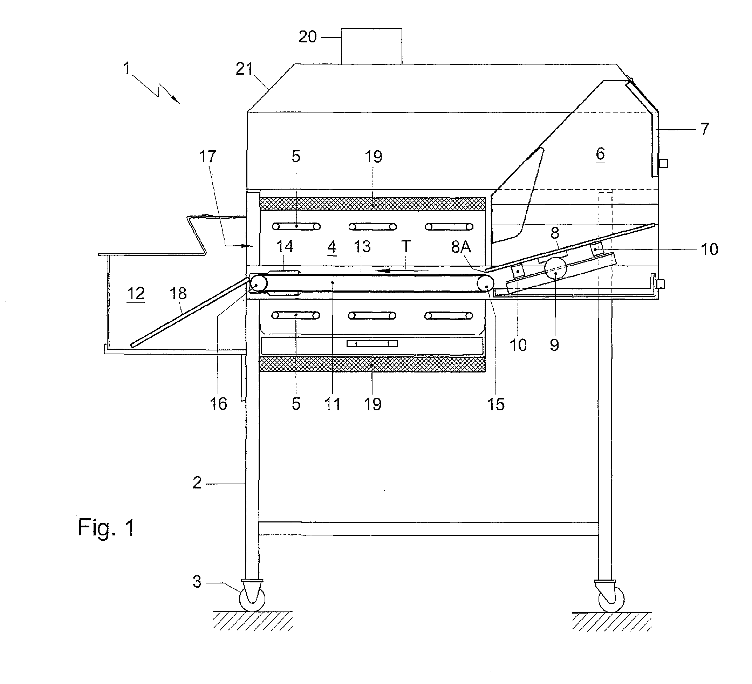

In Fig. 1, a bake-off oven 1 for baking-off foods, in particular rolls, is represented. Such a bake-off oven 1 can be placed, for instance, in supermarkets or fast food restaurants for offering fresh rolls to consumers. The bake-off oven 1 has a supporting frame 2 which is moveable with the aid of swivel castors 3 mounted underneath it. On the frame 2, a bake-off compartment 4 is provided, in which heating elements 5 are disposed for generating a bake-off temperature, for instance between approximately 185°C and 230°C. Preferably, a relatively low temperature, lower than 230°C is used in order to save energy and prevent the pre-baked rolls from becoming dehydrated or burnt. The bake-off compartment 4 is surrounded by an insulating blanket 19. However, the insulation can also be realized with different insulating material, such as for instance strips of mineral wool or a layer of aluminum foil. The bake-off oven 1 is further provided with a storage holder 6, also called storage box, which, via a filling flap 7, is accessible to be filled with foods, for instance 150 rolls. At the bottom of the storage holder 6, a shaker plate 8, also called vibratory plate, is positioned which, during use, is periodically set in motion with the aid of an intermittently driven motor 9 provided underneath it. In the embodiment as shown in Fig. 1, the shaker plate takes up virtually the entire bottom side of the storage holder 6. However, it is also possible that the shaker plate 8 forms only a part of the bottom side of the storage holder 6. The vibrating movements of the shaker plate 8 are damped via vibration dampers 10 designed in, for instance, rubber. The shaker plate 8 is positioned at a slight inclination relative to an endless conveyor belt 11 with a supporting surface 13, which extends in a transport direction T from the storage holder 6 through the bake-off compartment as far as an outlet bin 12 to be described hereinbelow. The shaker plate 8 is of flat design and has a position slightly tilted with respect to the direction of the supporting surface 13, around a horizontal axis which is orientated substantially transversely relative to the transport direction of the conveyor belt. The angle of inclination of the shaker plate with respect to the supporting surface 13 of the conveyor belt 11 is, for instance, between 4° and approximately 15°. However, it is not necessary that the shaker plate be of flat design. In an alternative embodiment, the shaker plate is bent in the direction of the conveyor belt 11. In the exemplary embodiment for baking off pre-baked rolls, as shown in Fig. 1, the angle of inclination is preferably approximately 10°. Through the shaking motion of the shaker plate, the pre-baked rolls are tossed from the storage holder 6 onto the supporting surface 13 of the conveyor belt 11. With an angle of inclination greater than approximately 15°, too many rolls end up simultaneously on the conveyor belt 11, so that they are not well baked. When the angle is too small, for instance smaller than approximately 4°, the number of tossed-off rolls is statistically less well defined. The supporting surface 13 of the conveyor belt 11 has a starting point 15 located slightly below a lower edge 8a provided on the shaker plate 8.

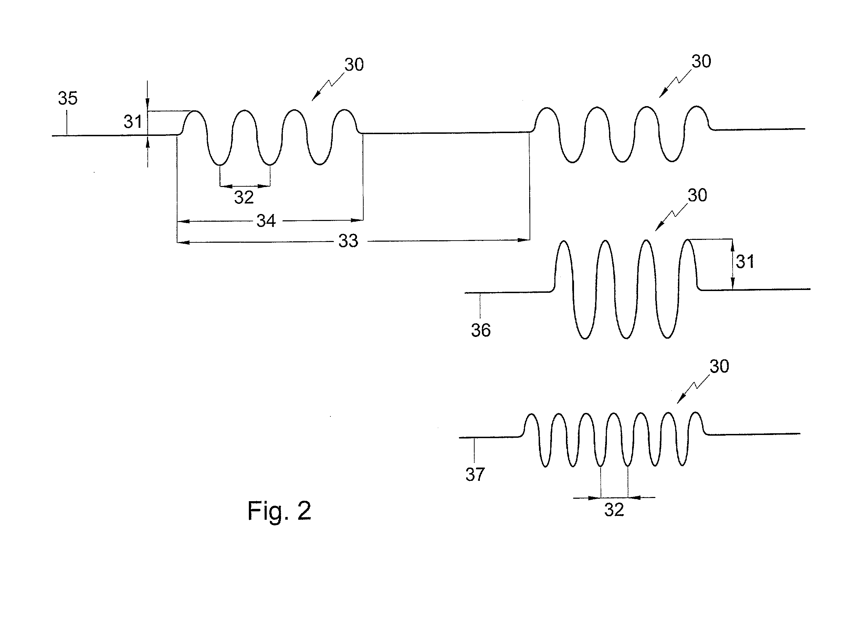

During operations, the shaker plate 8 periodically produces a pulse with mechanical vibrations. The vibrations are directed substantially upwards and downwards, transverse relative to the upper side of the shaker plate 8. Fig. 2 shows a first signal 35 with such pulses 30. During the pulse 30, the shaker plate vibrates. Then, the shaker plate 8 is at rest for some time. During operations, this cycle repeats itself continually. By setting the amplitude 31 of the vibrations between approximately 2 mm and approximately 8 mm, preferably 4 mm, statistically seen, a well defined movement is realized, as too small an amplitude causes no movement while too large an amplitude results in a badly predictable movement. In Fig. 2, a second signal 36 has a pulse 30 with a greater amplitude 31 than signal 35. Preferably, the frequency of the mechanical vibrations, which is the reciprocal of the vibration time 32, is between approximately 5 Hz and 25 Hz. Too low a frequency does not result in displacement either. A third signal 37 in Fig. 2 shows a pulse with a higher frequency, and hence a shorter vibration time 32 than the first signal 35. The cycle 33 of the pulse, i.e. the time between the moments two successive pulses 30 start is, for instance, between approximately ½ minute and approximately 3 minutes, depending on, inter alia, the type of foods to be bake off. In the case of baking rolls, this is preferably 1 minute. Further, the duration 34 of the pulse, i.e. the time duration in which the shaker plate performs the vibrations is between approximately 1 and approximately 10 seconds, also depending on the type of foods to be baked off and, for instance, the bake-off time.

During use, the conveyor belt 11 is continuously driven by an electric motor 14, preferably at a constant speed. This speed is adjustable and is a measure for the time a roll is present in the bake-off compartment 4, the bake-off time. The bake-off time is, for instance, between 4 minutes and 12 minutes, depending inter alia on the type of roll. With a predetermined, comparable bake-off time, white as well as brown rolls can be baked off. Further, the speed of the conveyor belt 11 is linearly coupled to the period the shaker plate is active so that the distribution of the rolls on the conveyor belt 11 is more or less independent of the speed with which the conveyor belt 11 is driven. The supporting surface 13 of the conveyor belt 11 is formed by a stainless steel woven gauze belt which comprises openings so that the rolls are baked off both at their upper side and at their lower side. However, the supporting surface 13 can also be formed in a different manner, for instance by elements orientated substantially transverse to the supporting surface 13.

At and end point 16 provided on the supporting surface 13, via a slide-off surface 18, the baked-off rolls are placed into the outlet bin 12. The bake-off oven 1 is not necessarily provided with such an outlet bin 12 but can also comprise, for instance, a detachable outlet element. Also, the outlet element needs not be directly attached to the bake-off oven 1. An independently movable outlet element is also possible. Adjacent an exit 17 of the bake-off compartment 4, the outlet bin 12 is attached to the frame 2. Walls of the outlet bin 12, also called take-out box, are of transparent design so that consumers can directly observe the freshly baked-off rolls. Adjacent the end point 16 of the supporting surface 13, the outlet bin 12 is provided with a detection system for detecting a degree of filling of the outlet bin 12. To that end, adjacent one side wall of the outlet bin 12, a LED (not shown) and a light-sensitive cell (also not shown) are positioned, while adjacent an opposite sidewall a reflecting element (also not shown) is provided, so that the light-sensitive cell can observe the LED via the reflecting element. Once the contact between LED and light-sensitive cell is permanently interrupted by a roll present in the optical path, the detection system generates, for instance with the aid of integrated logic, a stop signal for switching off the shaker plate 8. As a result, the supply of rolls which are baked off in the bake-off compartment 4 is stopped so that the rolls in the outlet bin 12 are not stacked too high.

Further, the bake-off oven comprises an oven hood 21 placed over the bake-off compartment, in which an air extraction opening 20 is provided, optionally provided with a ventilating device, for extracting baking odours. Below the bake-off compartment 4 and below the shaker plate 8, crumb drawers are provided for collecting crumbs falling from the rolls.

The invention is not limited to the exemplary embodiments described hereinabove. Many variants are possible.

For instance, such a bake-off oven can also be fixed in an outside wall of, for instance, a fast food restaurant, with the outlet bin provided on the outside of the building or in the wall so that consumers can purchase the rolls from outside without entering the building. Also, other foods can be offered in fresh condition to consumers with the aid of such a bake-off oven such as, for instance, freshly roasted peanuts.

Such variants will be clear to the skilled person and are understood to fall within the range of the invention as set forth in the following claims.

## Claims

1. A bake-off oven, comprising a bake-off compartment for baking off foods, and a heat source for heating the bake-off compartment, the bake-off oven further comprising an inlet and an outlet while between the inlet and the outlet a continuously driveable conveyor belt is provided which extends through the bake-off compartment for transporting the foods in a transport direction from the inlet bin to the outlet bin, while the inlet comprises a storage holder whose bottom side is formed, at least partly, by an intermittently drivable shaker plate.

2. A bake-off oven according to claim 2, wherein the shaker plate is directed towards the conveyor belt at a slightly downwards inclination.

3. A bake-off oven according to claim 2, wherein the shaker plate is at an angle of inclination of between approximately 4° and approximately 15° relative to a supporting surface provided on the conveyor belt.

4. A bake-off oven according to any one of the preceding claims, wherein the conveyor belt is provided lower in the bake-off oven than the shaker plate.

5. A bake-off oven according to any one of the preceding claims, wherein the shaker plate is arranged for during use periodically generating a pulse of mechanical vibrations.

6. A bake-off oven according to claim 5, wherein the amplitude of the mechanical vibrations is between approximately 2 mm and approximately 8 mm.

7. A bake-off oven according to claim 5 or 6, wherein the frequency of the mechanical vibrations is between 5 Hz and 25 Hz.

8. A bake-off oven according to any one of claims 5 - 7, wherein the duration of the pulse is between approximately 1 and approximately 10 seconds.

9. A bake-off oven according to any one of claims 5 - 8, wherein the cycle of the pulse is between approximately ½ minute and approximately 3 minutes.

10. A bake-off oven according to any one of claims 5 - 9, wherein the speed of the conveyor belt is adjustable, and wherein the cycle of the pulse is substantially linearly dependent on the speed of the conveyor belt.

11. A bake-off oven according to any one of the preceding claims, wherein adjacent the outlet, an outlet bin is provided.

12. A bake-off oven according to any one of the preceding claims, wherein walls of the outlet bin are of transparent design.

13. A bake-off oven according to any one of the preceding claims, wherein adjacent the outlet a detection circuit is provided comprising a sensor for detecting a degree of filling of the outlet bin, wherein the detection circuit is arranged for generating a stop signal for switching off the shaker plate after detection of a predetermined degree of filling.

14. A bake-off oven according to claim 13, wherein the sensor comprises an optical sensor.

15. A bake-off oven according to claim 14, wherein the detection circuit comprises a LED and a light-sensitive cell.

16. A bake-off oven according to claims 11 and 15, wherein adjacent one side wall of the outlet bin, the LED and the light sensitive cell are positioned and wherein adjacent an opposite sidewall, a reflecting element is provided.

17. A method for baking off foods, comprising the steps of
- periodically generating mechanical vibrations by a shaker plate for pouring pre-baked foods from an inlet bin onto a conveyor belt extending through a bake-off compartment of a bake-off oven; and
- transporting the foods through the bake-off compartment, while the foods are baked off.

18. A method according to claim 17, wherein after the detection of a predetermined degree of filling of the foods in the outlet bin, a stop signal is generated for switching off the shaker plate.

19. A method according to claim 17 or 18, wherein prior to baking off, the pre-baked foods exhibit a dark brown colour on the outside.

20. A method according to any one of claim 17 - 19, wherein the baking off of foods takes place at a temperature lower than approximately 230°C.
